(19) Europäisches Patentamt
European Patent Office
Office européen des brevets

(11) EP 0 767 947 B1

(12) EUROPEAN PATENT SPECIFICATION

(45) Date of publication and mention
of the grant of the patent:
**01.12.1999 Bulletin 1999/48**

(51) Int Cl.⁶: **G09B 23/00**, G09B 23/02,
G09B 23/22

(21) Application number: **95923348.7**

(22) Date of filing: **27.06.1995**

(86) International application number:
**PCT/FI95/00370**

(87) International publication number:
**WO 96/00433 (04.01.1996 Gazette 1996/02)**

(54) **OBSERVATION DEVICE**

DEMONSTRATIONSVORRICHTUNG

DISPOSITIF DE DEMONSTRATION

(84) Designated Contracting States:
**DE FR GB SE**

(30) Priority: **27.06.1994 FI 943079**

(43) Date of publication of application:
**16.04.1997 Bulletin 1997/16**

(73) Proprietor: **Leiviskä, Seppo Ilmari**
**28800 Pori (FI)**

(72) Inventor: **Leiviskä, Seppo Ilmari**
**28800 Pori (FI)**

(74) Representative: **Nieminen, Taisto Tapani**
**Patenttitoimisto T. Nieminen Oy,**
**Kehräsaari B**
**33200 Tampere (FI)**

(56) References cited:
**US-A- 595 455** **US-A- 4 199 876**

## Description

The invention relates to an observations device in accordance with patent claim 1, by means of which it is possible to illustrate figures, ratios and angles of plane geometry and stereometry etc as well as physical properties, for instance the travel of light.

Different observation objects are known which illustrate a ball, cube, pyramid, cones, plane figures etc. Further, objects similar to the above mentioned ones are known, which are splitted into puzzle type pieces for doing layouts and compositions. In addition, a cleavable ball is known, inside of which a smaller cleavable ball is nesting a.s.o. See, for example, US 4 199 876.

However, with the known single observation objects one has not achieved a very versatile result and by means of them one cannot produce an adequate picture of the correlations and ratios of figures and forms.

By means of an observation device according to this invention an unexpected improvement is reached with respect to former solutions. The invention is characterized in what is presented in the patent claims.

By means of the invention it is possible to visualize, three-dimensionally, numerous correlations between a ball, circle, cube, triangle etc. By means of nesting ball shells the serial nature of figures can be visualized as well as the reciprocal movements of the shells. In using transparent material in the parts, it is possible to observe, among other, a bigger variety of physical phenomenons, as for instance the travel of light. Thanks to the great number of independent shell parts the device can be observed even when taken partly into pieces, whereat the observation can be easily extended to several shell layers simultaneously. It is also possible to make the device a three-dimensional picture that can be observed on a computer screen and thereby delete or insert wanted parts.

In the following the invention is disclosed with reference to the enclosed drawing, where

Fig. 1 shows a side view of the observation device.
Fig. 2 shows a side view of the observation device, partly taken into pieces.
Fig. 3 shows a spherical cap part viewed from different angles.
Fig. 4 shows a triangular part of a ball shell viewed from different angles.

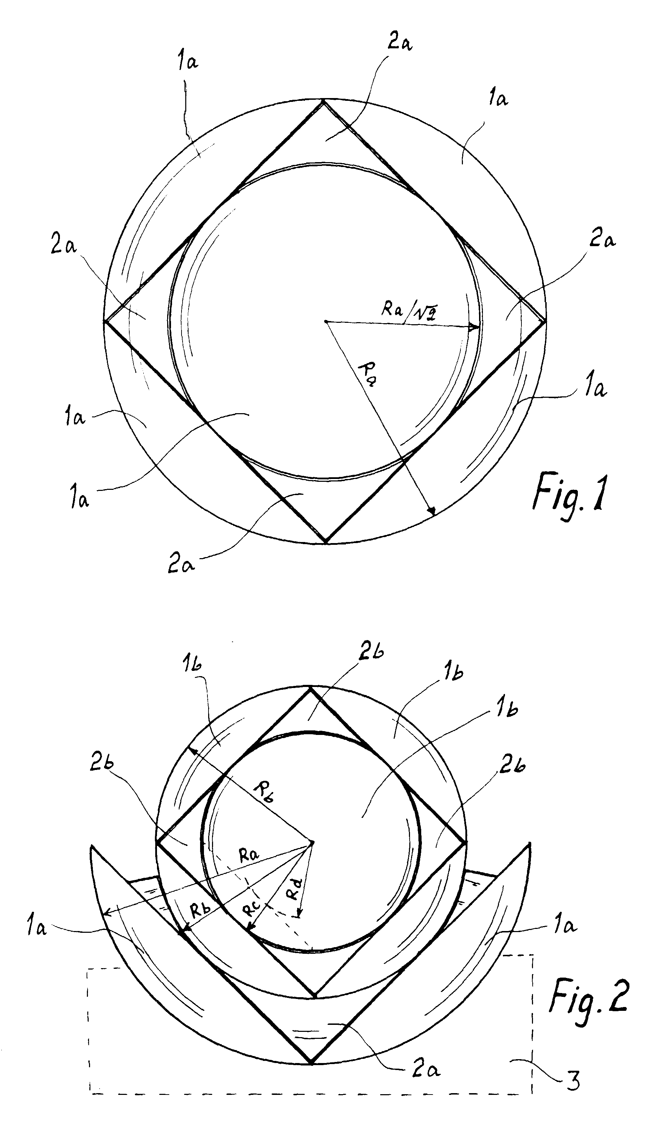

Figure 1 is an observation device according to the invention, the shape of which is a ball. The ball surface is formed of two different parts la and 2a. The configuration of part 1a is a spherical cap and thus its sphere is a circle and the configuration of part 2a is a triangle with uniform sides curved to the inside. The ball radius is Ra. The sphere line of part 1a is visible to the outside in form of a circle with a radius of Ra/$\sqrt{2}$. Figure 1 is a side view exactly from the spherical cap 1a direction, whereat one can observe that the complete ball surface is formed of six spherical caps 1a and eight triangular parts 2a. When such a ratio and parts are chosen, the outcome is a ball as per figure 1 viewed from the outside. Parts 1a and 2a can be taken into parts.

Figure 2 shows a ball from which parts 1a and 2a have been taken off and the next ball shell has become visible. The radius of ball shell b is Rb, which is Ra/$\sqrt{2}$. Accordingly, the radius of the inner ball is equal to the radius of the cap circle of the former ball surface. With this choice the outcome is a ball shell thickness of Ra - Ra/$\sqrt{2}$. Again the ball shell is formed of part 1b and 2b. The radius of the circle of spherical cap 1b is equal to the radius Ra of ball a. Furthermore, this is equal to the radius of ball cell c. The radius of the nesting balls a,b,c,d... etc is reached in dividing it by $\sqrt{2}$. Naturally, the difference of successive radius is always the thickness of the shell. Each ball shell can freely rotate inside the former ball and loose structural elements can be deleted. Dashed lines in the figure show a base 3 supporting the device.

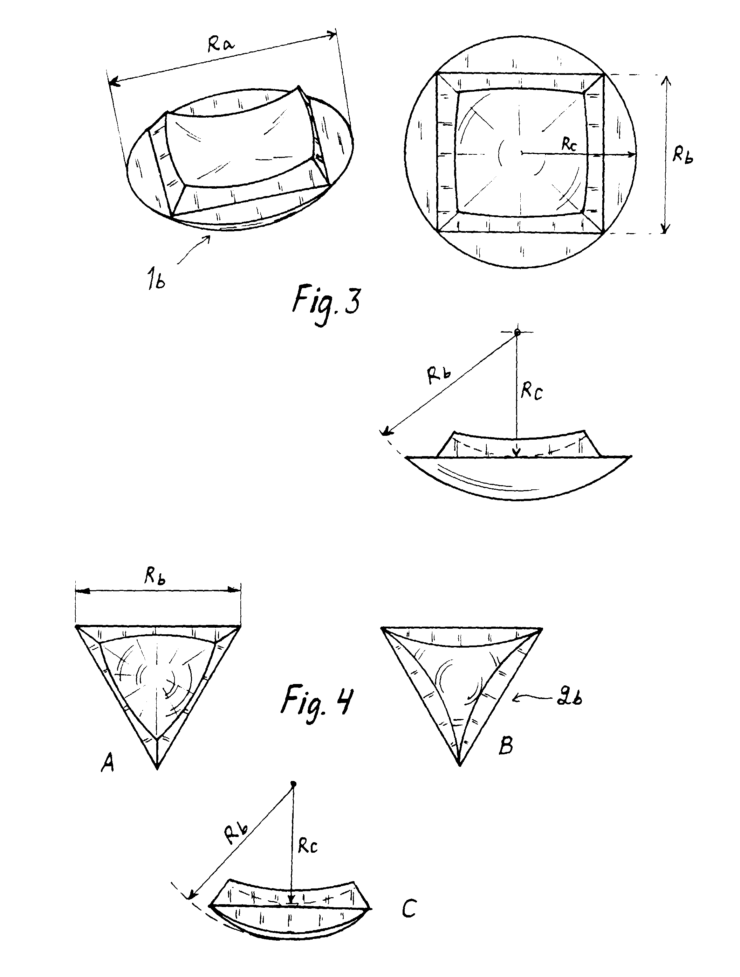

Figure 3 shows a cap section 1b illustrated from 3 different angles. Its circle has a radius of Ra/2 = Rc. Into its sphere circle a square with a side length of Rb is placed, which is also equal to the radius of curvature of spherical cap 1b. A broken pyramid runs from the square to the centre of the radius of curvature. The pyramid is broken by a ball surface illustrated by radius Rc running from the center of the radius of curvature. In this way the ball shell is formed at the spherical cap.

Figure 4 is a triangular section of ball surface 2b which is used with the same shell b together with the section shown in figure 3. Section 2b covers a triangel with uniform sides, the dimension of which is Rb and which takes its position in the device against side Rb of the square of cap section 1b. Section 2b in figure 4A is illustrated with the concave side upwards. The radius of curvature of the concave section is Rc. A broken triangel runs from the triangel points according to figure c, the cone of which is broken by the radius of curvature Rc. Section 2b in figure 4B is illustrated with the convex side upwards. The diagonal lateral surfaces illustrated in the figure are counter faces of the segments of spherical cap 1b. In figure 4C the section is viewed from one end, whereat the thickness of the section in the ball shell is determined by the radius of curvature Rb and Rc.

All parts 1 among themselves and parts 2 among themselves are uniform and in shifting over from one shell to another their ratio of size is $\sqrt{2}$. The geometrical properties of the parts can be mathematically derived when, at first, an unexpected choice is made to compose a ball shell of six cap shells tangent to each other, the radius of whose circle is the radius of the ball R/$\sqrt{2}$, and of eight trianglular shells between them when the thickness of shell has been determined as R - R/$\sqrt{2}$.

Advantageously, the device is made of transparent material, strongly translucent, if possible, so that refractions and reflections of light can be studied. The parts can also be magnetic on a shell in order to retain their spherical form better. As a three-dimensional device the unit is excellent means for observation of stereometry when the shells remain immobile or while rotating them into different positions with regard to each other. Generally, a small gap must be made between shells so that they can rotate among themselves and even the outermost shell parts can be accurately connected to each other.

Up to a certain volume the core of the device can be an open ball, whereby a source of light has been placed in it to illuminate outwards refractingly and reflectingly through the transparent shell parts. With shells in different colors it is also possile to observe color combinations.

Numerous modifications of the invention are possible within the scope determined in the enclosed patent claims.

## Claims

1. A three-dimensional observation device for observation of mathematical, physical and other figures, dimensions or properties, comprising several nesting ball shells (a,b,c...), each shell having outer radius (Ra, Rb, Rc...) and the shells can be separately added or removed, **characterized** in that each ball shell (a,b,c...) is composed of six spherical caps (1) tangent to one another and of eight triangular ball surface sections (2) between caps (1), all of them being independent parts while the thickness of the shell section formed by them is $R - R/\sqrt{2}$.

2. An observation device according to claim 1 **characterized** in that the ratio (Ra:Rb), (Rb:Rc),.. of the outer diameters of the nesting shell balls is $\sqrt{2}$.

3. An observation device according to claims 1 and 2 **characterized** in that the interface of spherical cap (1) and triangular part (2) is the side of a square placed inside the cap circle of spherical cap (1).

4. An observation device according to any of the previous claims 1 - 3 **characterized** in that the shell part (1),(2) is of transparent material.

5. An observation device according to any of the previous claims 1 - 4 **characterized** in that the shell part (1),(2) is of magnetic material.

6. An observation device according to any of the previous claims 1 - 5 **characterized** in that each shell part (a,b,c,.) is freely rotating inside the former shell.

## Patentansprüche

1. Ein dreidimensionales Beobachtungsgerät zur Beobachtung von mathematischen, physikalischen und anderen Figuren, Dimensionen oder Eigenschaften, bestehend aus mehreren verschachtelten Kugelschalen (a,b,c...), jede mit Aussenradius (Ra, Rb,Rc...), und wo die Kugeln einzeln zugefügt oder entfernt werden können, **gekennzeichnet dadurch**, dass jede Kugelschale aus sechs mit einander tangierenden kugelförmigen Hauben (1) und acht dreieckiqen Kugelflächensektoren (2) zwischen Hauben (1) besteht, die alle selbständige Teile sind, indem die Stärke des von ihnen geformten Schalenteils $R - R/\sqrt{2}$ ist.

2. Ein Beobachtungsgerät gemäss Anspruch 1 **gekennzeichnet dadurch**, dass das Verhältnis (Ra: Rb), (Rb,Rc),.. des Aussendiameters der verschachtelten Schalenkugel $\sqrt{2}$ ist.

3. Ein Beobachtungsgerät gemäss Ansprüchen 1 und 2 **gekennzeichnet dadurch**, dass die Schnittfläche der Kugelfläche (1) und des dreieckigen Teils (2) die Seite eines innerhalb des Haubenzirkels der Kugelhaube (1) plazierten Quadrats ist.

4. Ein Beobachtungsgerät gemäss einem der obigen Ansprüche 1-3 **gekennzeichnet dadurch**, dass Haubenteil (1),(2) aus durchsichigem Material ist.

5. Ein Beobachtungsgerät gemäss einem der obigen Ansprüche 1-4 **gekennzeichnet dadurch**, dass Haubenteil (1),(2) aus magnetischem Material ist.

6. Ein Beobachtungsgerät gemäss einem der obigen Ansprüche 1-5 **gekennzeichnet dadurch**, dass jeder Kugelteil (a,b,c,...) innerhalb der vorherigen Haube frei rotiert.

## Revendications

1. Un dispositif d'observation tridimensionnel pour l'observation des figures, dimensions ou propriétés mathématiques, physiques ou autres, comprenant plusieurs enveloppes sphériques l'une à l'intérieur de l'autre (a, b, c...) dont chacune a un diamètre extérieur (Ra, Rb, Rc...), lesdites enveloppes pouvant être séparément mises en place ou retirées, **caractérisé** en ce que chaque enveloppe sphérique (a, b, c...) est composée de six calottes sphériques (1) tangentes l'une à l'autre et de huit sections triangulaires de surface sphérique (2) entre les calottes (1), toutes les parties étant indépendentes et formant une section d'enveloppe dont l'épaisseur est de $R - R/\sqrt{2}$.

2. Un dispositif d'observation conformément à la revendication 1, **caractérisé** en ce que la proportion des diamètres extérieurs (Ra:Rb), (Rb:Rc),.. des enveloppes sphériques emboîtées est de √2.

3. Un dispositif d'observation conformément aux revendications 1 et 2, **caractérisé** en ce que l'interface de la calotte sphérique (1) et de la partie triangulaire (2) constitue le côté d'un carré placé à l'intérieur du cercle de la calotte sphérique.

4. Un dispositif d'observation conformément à l'une quelconque des revendications précédentes 1 à 3, **caractérisé** en ce que la partie enveloppe (1), (2) est d'un matériau transparent.

5. Un dispositif d'observation conformément à l'une quelconque des revendications précédentes 1 à 4, **caractérisé** en ce que la partie enveloppe (1), (2) est d'un matériau magnétique.

6. Un dispositif d'observation conformément à l'une quelconque des revendications précédentes 1 à 5, **caractérisé** en ce que chaque partie enveloppe (a, b, c...) tourne librement à l'intérieur de l'enveloppe précédente.

Fig.1

Fig.2

Fig. 3

Fig. 4